# EUROPÄISCHE PATENTSCHRIFT

(11) **EP 0 438 729 B1**
(45) Veröffentlichungstag und Bekanntmachung des Hinweises auf die Patenterteilung: **16.06.1993**
(21) Anmeldenummer: 90124550.6
(22) Anmeldetag: 18.12.1990
(51) Int. Cl.: B65D 88/12, B65D 90/00

(54) **Kühlcontainer mit einem Ladungssicherungsrahmen**
Refrigerated container with a freight protection frame
Conteneur frigorifique avec un cadre protecteur pour la charge

(30) Priorität: 22.01.1990 DE 9000643 U
(43) Veröffentlichungstag der Anmeldung: 31.07.1991
(73) Patentinhaber: Umformtechnik Hausach GmbH, D-77750 Hausach (DE)
(72) Erfinder: Schmider, Klaus, W-7613 Hausach/Baden (DE)
(74) Vertreter: Niemann, Uwe, Dr.-Ing.

(56) Entgegenhaltungen:
- WO-A-89/10857
- DE-A- 1 946 947
- US-A- 3 438 149
- US-A- 3 519 140
- US-A- 4 049 311

## Beschreibung

Die Erfindung betrifft einen Kühlcontainer mit einem Ladungssicherungsrahmen. Unter Kühlcontainer werden im Rahmen der Erfindung auch Kühlaufbauten oder dergleichen verstanden.

Ladungssicherungsrahmen in Kühlcontainern haben die Aufgabe, die Ladung im Container gegen Rutschen bei Beschleunigungs- bzw. Bremsbelastung zu sichern. Bekannte Ladungssicherungssysteme sind Klemmbalken, Spannetze, Spanngurte und Sperrbalken, welche in Halterungen, z.B. Ösen, Kettenschlaufen, Napfleisten oder Zurrschienen, eingreifen. Insbesondere Zurrschienen oder Napfleisten sind in der Regel wandbündig in die Seitenwände des Containers eingelassen und begünstigen mit ihren Ecken und Nischen die Bildung von Bakteriennestern. Außerdem müssen die Bauteile dieser Systeme einzeln verlegt und im Container befestigt werden.

Bei einem im Dokument WO-A-8 910 857 beschriebenen Kühlcontainer gemäß dem Oberbegriff des Patentanspruch 1 sind im Dachbereich des Kühlcontainers von innen gegen die Auskleidung gesetzte Schienen angeordnet, die sich in Längsrichtung des Kühlcontainers erstrecken und an denen der um eine horizontale Achse verschwenkbare und in seinen Endlagen festlegbare Ladungssicherungsrahmen bewegbar ist. Dieser Ladungssicherungsrahmen kann beliebig in Längsrichtung des Containers hin- und herbewegt sowie an beliebiger Stelle funktionsgerecht festgelegt werden.

Aufgabe der Erfindung ist es, einen gattungsgemäßen Kühlcontainer so zu verbessern, daß der Ladungsfreiraum nicht eingeschränkt ist. Diese Aufgabe wird mit dem Kühlcontainer nach Patentanspruch 1 gelöst. Das Eckverbindungsprofil übernimmt damit eine Doppelfunktion, weil es nicht nur die seitlichen und die Dachauskleidung des Kühlcontainers verbindet, sondern auch eine Fahrbahn für den Laufwagen des Ladungssicherungsrahmens bildet. Da das die Schienen bzw. die Fahrbahn bildende Profilteil des Eckverbindungsprofils in die Dachauskleidung eingelassen ist, wird der Ladungsfreiraum nicht eingeschränkt. Im übrigen kann das Profilteil außenseitig wenigstens eine in die Auskleidung eingebettete Verankerung aufweisen.

In weiterer Ausgestaltung kann das Eckverbindungsprofil im Bereich seines an die seitliche Auskleidung anschließbaren Abschnitts eine zum Innenraum gerichtete Rastleiste aufweisen, an der der hochgeschwenkte Ladungssicherungsrahmen gehalten werden kann.

Der Ladungssicherungsrahmen wird zweckmäßig schwenkbar an den beiderseitigen Laufwagen gelagert, so daß die Schwenkbewegung einerseits und die Verschiebebewegung andererseits unabhängig voneinander durchgeführt werden können. Um die Schwenkbewegung des Ladungssicherungsrahmens zu unterstützen, können Federn, insbesondere Gasfedern, einerseits an den Laufwagen und andererseits am Ladungssicherungsrahmen abgestützt sein.

Eine einfache Möglichkeit, den Ladungssicherungsrahmen in seiner oberen hochgeschwenkten Endlage zu halten, besteht darin, den Ladungssicherungsrahmen mit den Rastleisten zugeordneten Fallenriegeln auszurüsten, die beim Hochschwenken des Ladungssicherungsrahmens automatisch hinter die Rastleisten schnappen. Es versteht sich, daß diese Fallenriegel mit geeigneten Mitteln wieder gelöst werden könen, z.B. mit Hilfe von über Umlenkrollen geführten Zugseilen.

Der Ladungssicherungsrahmen kann ferner ausfahrbare, gegen den Boden und/oder die Decke des Kühlcontainers verspannbare Stützen aufweisen, so daß der Ladungssicherungsrahmen in seiner funktionsgerechten Endlage gesichert werden kann. Zusätzlich können die Laufwagen Anschläge für die Endlage des Ladungssicherungsrahmens aufweisen.

Im folgenden wird ein in der Zeichnung dargestelltes Ausführungsbeispiel der Erfindung erläutert; es zeigen:
- Fig. 1: schematisch und teilweise einen Querschnitt durch einen Kühlcontainer mit einem Ladungssicherungsrahmen,
- Fig. 2: teilweise eine Ausschnittsvergrößerung aus dem Gegenstand nach Fig. 1,
- Fig. 3: eine Seitenansicht eines Laufwagens mit hochge schwenktem Ladungssicherungsrahmen (teilweise),
- Fig. 4: den Gegenstand nach Fig. 3 mit dem Ladungs sicherungsrahmen in Funktionsstellung.

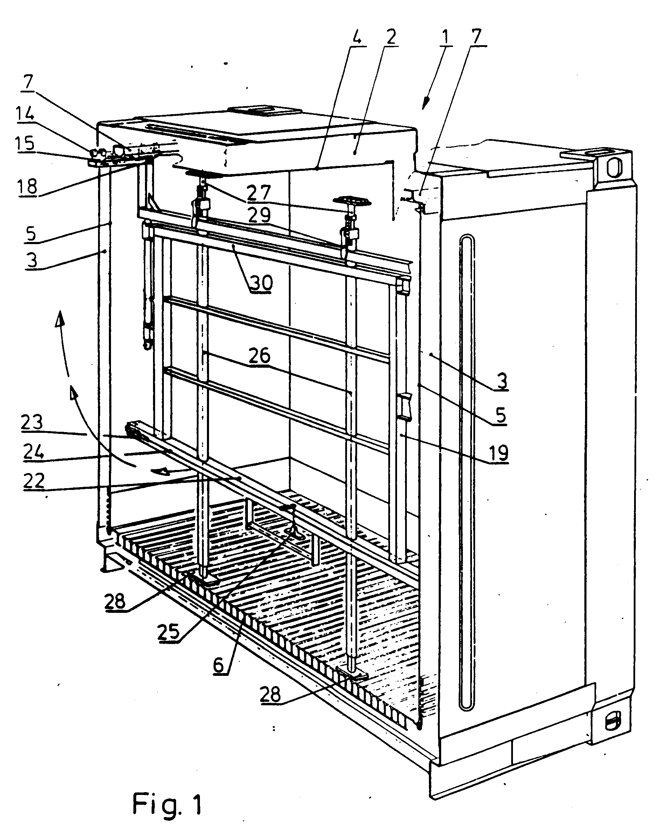

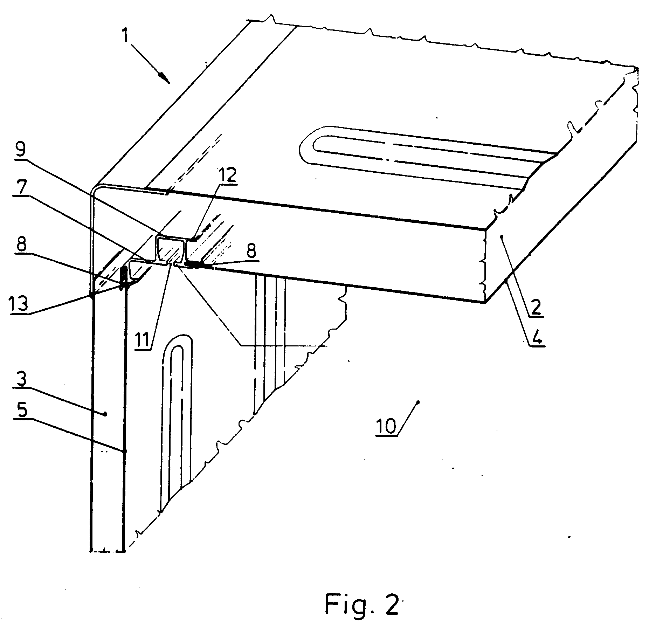

Der dargestellte Kühlcontainer 1 besitzt den üblichen Containeraufbau, zusätzlich jedoch eine innere Auskleidung 2, 3, die aus isolierendem Schaumstoff bestehen kann, z.B. aus Polyurethanschaum. Die Auskleidung 2, 3 ist innenseitig mit Blechen 4, 5 abgedeckt, von denen in Figur 2 lediglich ein Dachblech 4 und ein Seitenblech 5 wiedergegeben sind, während in Figur 1 auch ein in eine Bodenauskleidung integrierter Boden 6 dargestellt ist.

Das Dachblech 4 und die Seitenbleche 5 sind über Eckverbindungsprofile 7 aneinander angeschlossen. Dazu weist das winkelförmige Eckverbindungsprofil an den Enden seiner Schenkel Einschubschlitze 8 für die darin einzuschiebenden Bleche 4 bzw. 5 auf.

Das Eckverbindungsprofil 7 weist außerdem ein in die Dachauskleidung 2 eingelassenes Profilteil 9 mit einem rechteckigen bis quadratischen Querschnitt auf, welches zum Innenraum 10 des Kühlcontainers 1 über einen Längsschlitz 11 geöffnet ist.

Das Profilteil 9 des Eckverbindungsprofils 7 weist außerdem eine in die Dachauskleidung 2 eingebettete Verankerung in Form einer längslaufenden Leiste 12 auf. An dem mit dem Seitenblech 5 verbundenen Schenkel des Eckverbindungsprofils 7 ist eine längslaufende Rastleiste 13 mit dreieckförmigem Querschnitt vorgesehen, deren Funktion später erläutert wird.

In den Profilteilen 9 der Eckverbindungsprofile 7 sind Rollen 14 von Laufwagen 15 geführt und abgestützt. Die Laufwagen 15 bestehen aus einem Träger 16, der an beiden Enden die Rollen 14 trägt, welche über die Längsschlitze 11 durchgreifende Rollenträger 17 angeschlossen sind.

An den Trägern 16 der beiden Kühlcontainer 1 geführten Laufwagen 15 ist um eine horizontale Achse 18 schwenkbar ein Ladungssicherungsrahmen 19 gelagert. Zur Unterstützung der Schwenkbewegung des Ladungssicherungsrahmens sind Gasdruckfedern 20 vorgesehen, die gelenkig einerseits am Träger 16 und andererseits an einer Konsole 21 des Ladungssicherungsrahmens gelagert sind.

Der in Figur 1 mit weiteren Einzelheiten dargestellte Ladungssicherungsrahmen 19 besitzt zumindest einen unteren Querbalken 22, an dessen freien Enden federnd gelagerte Fallenriegel 23 vorgesehen sind, die beim Hochschwenken des Ladungssicherungsrahmens über die Rastleiste 13 schnappen und den Ladungssicherungsrahmen 19 in hochgeschwenkter Stellung halten. Die Fallenriegel 23 sind bei der dargestellten Ausführung mit über nicht gezeichnete Umlenkrollen geführten Zugseilen 24 und einem an die Zugseile 24 angeschlossenen Handgriff 25 lösbar.

Der Ladungssicherungsrahmen 19 weist ferner in zwei vertikalen Rohren 26 geführte, ausfahrbare und gegen den Boden 6 sowie gegen das Dachblech 4 verspannbare Stützen 27, 28 auf, die bei der dargestellten Ausführung mit Handhebeln 29 betätigbar sind, welche an einem oberen Querbalken 30 angeordnet sind.

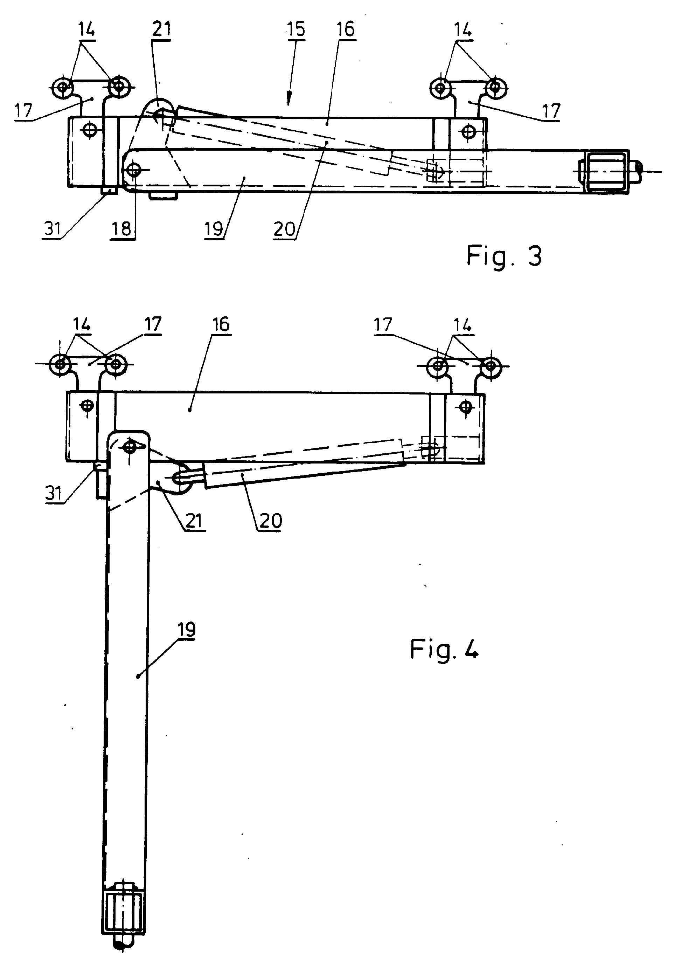

Während der Beladung des Innenraums 10 des Kühlcontainers 1 befindet sich der Ladungssicherungsrahmen in der hochgeschwenkten Stellung (Fig. 3). Nach teilweiser Beladung wird der Ladungssicherungsrahmen durch Zug am Handgriff 25 und dadurch bewirktes Lösen der Fallriegel 23 in seine vertikale Position geschwenkt (Fig. 4) und dort zunächst durch Anschläge 31 der Laufwagen 15 gehalten. Dann wird der Ladungssicherungsrahmen 19 mit seinem Laufwagen 15 bis in die gewünschte Ladungssicherungsposition verschoben. Dort werden die oberen Stützen 27 ausgefahren, sowie gegen das Dachblech 4 bzw. gegen den Boden 6 verspannt. Damit ist der Ladungssicherungsrahmen (19) festgelegt.

### Bezugszeichenliste

1 Kühlcontainer
2 Dachauskleidung
3 Seitenauskleidung
4 Dachblech
5 Seitenblech
6 Boden
7 Eckverbindungsprofil
8 Einschubschlitze
9 Profilteil
10 Innenraum
11 Längsschlitz
12 Leiste
13 Rastleiste
14 Rollen
15 Laufwagen
16 Träger
17 Rollenträger
18 Achse
19 Ladungssicherungsrahmen
20 Gasdruckfedern
21 Konsole
22 Querbalken
23 Fallenriegel
24 Zugseile
25 Handgriff
26 Rohre
27 Stützen
28 Stützen
29 Handhebel
30 Querbalken
31 Anschläge

## Patentansprüche

1. Kühlcontainer mit einem Ladungssicherungsrahmen (19) und einer inneren Auskleidung (2, 3, 4, 5), wobei im Dachbereich des Kühlcontainers (1) Profilteile (9) mit rechteckigem bis quadratischem Querschnitt und einem zum inneren Raum (10) offenen Längsschlitz (11) angeordnet sind, die sich in Längsrichtung des Kühlcontainers (1) erstrecken und Schienen für den um eine horizontale Achse (18) verschwenkbaren sowie in den Endlagen der Schwenkung um diese Achse (18) festlegbaren Ladungssicherungsrahmen (19) bilden, **dadurch gekennzeichnet**, daß das Profilteil (9) mit den Schienen als Teil eines winkelförmigen Eckverbindungsprofils (7) der inneren Auskleidung (2, 3, 4, 5 ) des Kühlcontainers ausgebildet und in die Dachauskleidung (2) eingelassen ist.

2. Kühlcontainer nach Anspruch 1, **dadurch gekennzeichnet**, daß das Eckeverbindungsprofil (7) an den Enden seiner Schenkel Einschubschlitze (8) für darin einzuschiebende Bleche (4, 5) der inneren Auskleidung (2, 3, 4, 5) aufweist.

3. Kühlcontainer nach Anspruch 1 oder 2, **dadurch gekennzeichnet**, daß im Profilteil (9) die Rollen (14) eines Laufwagens (15) für den Ladungssicherungsrahmen (19) geführt und abgestützt sind.

4. Kühlcontainer nach einem der Ansprüche 1 - 3, **dadurch gekennzeichnet**, daß das Profilteil (9) außenseitig wenigstens eine in die Auskleidung (2) eingebettete Verankerung (12) aufweist.

5. Kühlcontainer nach einem der Ansprüche 1 - 4, dadurch gekennzeichnet, daß das Eckverbindungsprofil (7) im Bereich seines an die seitliche Auskleidung (3) anschließbaren Abschnitts eine zum Innenraum (10) gerichtete Rastleiste (13) aufweist.

6. Kühlcontainer nach einem der Ansprüche 1 - 5, dadurch gekennzeichnet, daß der Ladungssicherungsrahmen (19) schwenkbar an den beiderseitigen Laufwagen (15) gelagert ist.

7. Kühlcontainer nach einem der Ansprüche 1 - 6, gekennzeichnet durch einerseits an den Laufwagen (15) und andererseits am Ladungssicherungsrahmen (19) abgestützte Federn, insbesondere Gasdruckfedern, zum Unterstützen der Schwenkbewegung des Ladungsicherungsrahmens (19).

8. Kühlcontainer nach einem der Ansprüche 1 - 7, dadurch gekennzeichnet, daß der Ladungssicherungsrahmen (19) den Rastleisten (13) zugeordnete Fallenriegel (23) aufweist, die den Ladungssicherungsrahmen (19) in hochgeschwenkter Endlage halten.

9. Kühlcontainer nach einem der Ansprüche 1 - 8, dadurch gekennzeichnet, daß der Ladungssicherungsrahmen (19) ausfahrbare, gegen den Boden (6) und/oder das Dach (4) des Kühlcontainers (1) verspannbare Stützen (27, 28) aufweist.

10. Kühlcontainer nach einem der Ansprüche 1 - 9, dadurch gekennzeichnet, daß die Laufwagen (15) Anschläge (31) für die Endlage des Ladungssicherungsrahmens (19) auf weisen.

## Claims

1. Refrigerated container with a freight protection frame (17) and an inner lining (2, 3, 4, 5), wherein arranged in the roof region of the refrigerated container (1) are profile members (9) with rectangular to square cross-section and a longitudinal slot (11) open towards the interior space (10), which members extend in the longitudinal direction of the refrigerated container (1) and form rails for the freight projection frame (19) pivotable about a horizontal axis (18) as well as securable in the end positions of pivotation about this axis (18), characterised thereby that the profile member (9) with the rails is constructed as a part of an angled corner connecting profile (7) of the inner lining (2, 3, 4, 5,) of the refrigerated container and is let into the roof lining (2).

2. Refrigerated container according to claim 1, characterised thereby that the corner connecting profile (7) has at the ends of its limbs insertion slots (8) for sheets (4, 5), which are to be pushed in, of the inner lining (2, 3, 4, 5).

3. Refrigerated container according to claims 1 or 2, characterised thereby that the rollers (14) of a carriage (15) for the freight projection frame (19) are guided and supported in the profile member (9).

4. Refrigerated container according to one of claims 1 to 3, characterised thereby that the profile member (9) has at the outer side at least one anchor (12) embedded in the lining (2).

5. Refrigerated container according to one of claims 1 to 4, characterised thereby that the corner connecting profile (7) has in the region of its portion connectible to the side lining (3) a detent strip (13) directed towards the interior space (10).

6. Refrigerated container according to one of claims 1 to 5, characterised thereby that the freight protection frame (19) is mounted on the carriages (15) at the two sides to be pivotable.

7. Refrigerated container according to one of claims 1 to 6, characterised by springs, particularly gas compression springs, supported at one end on the carriages (15) and at the other end on the freight protection frame (19), for the assisting of the pivot movement of the freight protection frame (19).

8. Refrigerated container according to one of claims 1 to 7, characterised thereby that the freight protection frame (19) comprises latch bars (23) which are associated with the detent strips (13) and which hold the freight protection frame (19) in pivoted-up end position.

9. Refrigerated container according to one of claims 1 to 8, characterised thereby that the freight protection frame (19) comprises retractible supports (27, 28) tightenable against the base (6) and/or the roof (4) of the refrigerated container (1).

10. Refrigerated container according to one of claims 1 to 9, characterised thereby that the carriages (15) comprise abutments (31) for the end position of the freight protection frame (19).

## Revendications

1. Conteneur frigorifique avec un cadre protecteur pour le chargement (19) et un revêtement intérieur (2, 3, 4, 5), des éléments en profilé (9) de section rectangulaire à carrée, présentant une fente longitudinale (11) ouverte sur l'espace intérieur (10), qui s'étendent dans la direction longitudinale du conteneur frigorifique (1) et qui forment des glissières pour le cadre protecteur pour le chargement (19) pouvant pivoter autour d'un axe horizontal (18) et pouvant être bloqué autour de cet axe (18) dans les positions extrêmes de pivotement étant disposés dans la zone du plafond du conteneur frigorifique (1), caractérisé en ce que l'élément en profilé (9) avec les glissières est réalisé sous la forme d'une partie d'un profilé d'assemblage d'angle (7) en forme de cornière du revêtement intérieur (2, 3, 4, 5) du conteneur frigorifique et est encastré dans le revêtement de plafond (2).

2. Conteneur frigorifique selon la revendication 1, caractérisé en ce que le profilé d'assemblage d'angle (7) présente, aux extrémités de ses montants, des fentes d'insertion (8) pour des tôles (4, 5) du revêtement intérieur (2, 3, 4, 5) qui sont destinées à y être insérées.

3. Conteneur frigorifique selon la revendication 1 ou 2, caractérisé en ce que les galets (14) d'un chariot (15) pour le cadre protecteur pour le chargement (19) sont guidées et reposent dans l'élément en profilé (9).

4. Conteneur frigorifique selon l'une des revendications 1 à 3, caractérisé en ce que l'élément en profilé (9) présente, sur l'extérieur, au moins une fixation (12) encastrée dans le revêtement (2).

5. Conteneur frigorifique selon l'une des revendications 1 à 4, caractérisé en ce que le protilé d'assemblage d'angle (7) présente, dans la zone de sa partie pouvant être reliée au revêtement latéral (3), une aile d'arrêt (13) orientée vers l'espace intérieur (10).

6. Conteneur frigorifique selon l'une des revendications 1 à 5, caractérisé en ce que le cadre protecteur pour le chargement (19) est monté de manière pivotante sur les chariots (15) situés des deux côtés.

7. Conteneur frigorifique selon l'une des revendications 1 à 6, caractérisé par des ressorts, notamment des ressorts à gaz sous pression, prenant appui, d'une part, sur les chariots (15) et, d'autre part, sur le cadre protecteur pour le chargement (19) pour assister le pivotement du cadre protecteur pour le chargement (19).

8. Conteneur frigorifique selon l'une des revendications 1 à 7, caractérisé en ce que le cadre protecteur pour le chargement (19) présente des pênes (23) associés aux ailes d'arrêt (13), qui maintiennent le cadre protecteur pour le chargement (19) en position extrême supérieure de pivotement.

9. Conteneur frigorifique selon l'une des revendications 1 à 8, caractérisé en ce que le cadre protecteur pour le chargement (19) présente des supports (27, 28) amovibles pouvant être appuyés contre le fond (6) et / ou le plafond (4) du conteneur frigorifique (1).

10. Conteneur frigorifique selon l'une des revendications 1 à 9, caractérisé en ce que les chariots (15) présente des butées (31) pour la position extrême du cadre protecteur pour le chargement (19).
